# EUROPEAN PATENT APPLICATION

(11) **EP 3 934 260 A1**
(43) Date of publication of application: **05.01.2022**
(21) Application number: 20183222.7
(22) Date of filing: 30.06.2020
(51) Int. Cl.: H04N 21/2343, H04N 19/587

(54) **TRANSPORT OF A MOVIE IN MULTIPLE FRAME RATES TO A FILM AUDITORIUM**

(71) Applicant: YMAGIS, 92240 Malakoff (FR)
(72) Inventor: LEJEUNE, Cédric, 59350 SAINT-ANDRE-LEZ-LILLE (FR)
(74) Representative: Gevers & Orès

(57) **Abstract**

The present invention relates to a package of computer files (30), preferably a Digital Cinema Package (DCP), which includes images for playing a movie at two frame rates. The images (11) for the lower frame rate are in a first computer file (31), preferably in a first Material eXchange Format (MXF) container, and the images (12) for the higher frame rate are in a second computer file (32), preferably in a second MXF container. The package of computer files (30) also includes first pieces (61) of information, for the lower frame rate, and second pieces (62) of information, for the higher frame rate.

## Description

### Field of the invention

The invention relates to the transport and management of a movie in multiple frame rates to a film auditorium.

### Background of the invention

Movies are currently available in multiple frame rates for display in film auditorium. For example, the same movie can be available at 24i/s and 48i/s. The current method to transport movies in multiple frame rates to a film auditorium is to create a full package of computer files (for example a full DCP) for each frame rate. The provision of movies in multiple frame rates makes the movie transport and the movie restitution cumbersome.

### Summary of the invention

An object of the present invention is to make less cumbersome the transport and management of versions of a movie that can be displayed in various frame rates.

The invention relates first to a method for creating a package of computer files designed to transport a movie to a film auditorium of a cinema, said method comprising the following steps:
(a) creating a first computer file comprising a first sequence of images comprising initial images, said first sequence having a first frame rate, and
(b) creating a second computer file comprising intermediate images designed to take place between the initial images in the movie when the movie is played at a second frame rate multiple of the first frame rate,
wherein the package of computer files comprises the first computer file, the second computer file, first pieces of information indicating that the first sequence is suitable for playing the movie at the first frame rate, and second pieces of information indicating how to play the movie in the second frame rate using, at least, the second computer file.

With the invention, a single package of computer files can transport a movie to be played in at least two frame rates. Therefore, if a cinema shows the movie in multiple frame rates (for example if the cinema includes film auditoriums with display systems suitable for multiple frame rates), it is possible to transport only one package of computer files to this cinema. The display system can determine, based on its frame rate, if it plays the movie as the first sequence of images or if it plays the movie as a succession of the initial and intermediate images. The package of computer files provides also to the display system the information for playing the movie in each of the frame rates.

In the method according to the invention, the images required for the first and a second frame rates are provided to the film auditorium: there is no need of any image determination at the film auditorium.

Moreover, in case of last minute change in the movie (for example if part of the movie is censored, or if the production has to adapt a scene), only one DCP has to be modified, instead of a DCP for each frame rate.

Steps (a) and (b) may be inverted.

The images are digital images. The package of computer files is preferably a digital cinema package (DCP). The first and second computer files are preferably Material eXchange Format (MXF) containers. The first (respectively second) pieces of information are preferably included in a first (respectively second) Composition Playlists (CPL).

The initial images are preferably original images of the movie. For example, they may have been shot and possibly modified in post-production, or they may have been created by Computer-Generated Imagery (CGI). In a first embodiment of the invention, the intermediate images are also original images of the movie, created preferably in the same way as the initial images. The "initial images" may also be called "first images".

The package may also include a file with images designed to take place between the initial images, and possibly intermediate images, in the movie when the movie is played at a third frame rate different from the first and second frame rates.

In the frame of the present document, a display system comprises a computing unit and preferably: a projector or a LED screen. The computing unit is preferably in the cinema, but it may be in a remote computer or server.

In the frame of the present document, a cinema is a facility that comprises at least one film auditorium. It preferably comprises also one projection booth with a projector for each film auditorium.

In the frame of the present document, initial images that are chronologically directly following each other at the first frame rate when the movie is played are "successive" initial images.

The second frame rate is preferably equal to N times the first frame rate. The number of intermediate images between each two initial images is preferably equal to (N-1). For example, if the first time rate is 24i/s, and the second frame rate is 48i/s (respectively 72i/s or 96i/s), one intermediate image is (respectively two or three intermediate images are) located between each two initial images. The "intermediate images" may also be called "second images".

In a variant of the invention, the second computer file comprises the initial images and the intermediate images. In such a case, the second computer file preferably comprises a second sequence of images wherein intermediate images are located between initial images.

In another variant of the invention, the second pieces of information indicate how to place the intermediate images with respect to the initial images for playing the movie at the second frame rate. In this embodiment, the images that are used in the first and second frame rates, i.e. the initial images, are not present in the second computer file. They are preferably present only once in the package of computer files, which decreases the weight of the package of computer files. The intermediate images fill the gaps between the initial images in the second frame rates. The second pieces of information indicate how to introduce at least one intermediate image between two successive initial images when the movie is played at the second frame rate.

In a second embodiment of the invention, the method comprises a creation of the intermediate images based on the initial images. In this second embodiment, the initial images are used to create the intermediate images. The method is thus suitable for increasing the frame rate of a movie that was initially created at a first frame rate. This is especially interesting for high dynamic range movies that were created (by filming or by CGI for example) only at the first frame rate, and that are displayed in high dynamic range (HDR). Indeed, a problem of the HDR technology is that it increases luminance and contrast, which amplifies motion artifacts called judder (since the human perception feels more the transition between images when luminance and contrast are high). This problem can be overcome by increasing the frame rate, but before the invention, this could be done only if a higher frame rate is available. The method of the second embodiment of the invention makes possible to overcome this problem even if the higher frame rate is not initially available, by creating the intermediate images from the initial images. The creation of the intermediate images based on the initial images is preferably done during post-production.

In an embodiment, said creation of the intermediate images involves that at least one of the intermediate images is determined using an interpolation between two successive initial images chronologically located before and after said at least one of the intermediate images.

If two initial images are at t and t+1, the intermediate image at time T in the interval ]t, t+1[ results, directly or indirectly, from the interpolation of the initial images at t and t+1.

The interpolation may be done in any way. For example, it may involve any of: a mixing of the two successive initial images, a selection by motion vector analysis, or by processing through a neural network.

The intermediate images may be the direct result of the interpolation. However, it is preferred that the interpolation provides processed images that are then used to generate the intermediate images. They are called "processed" images because they are coming from image processing of the initial images. They may be called "third images". They may also be called "temporary images" since they do not appear as such in the played movie.

In an embodiment, said creation of the intermediate images involves that at least one of the intermediate images is determined using a combination of, at least:
- a first combining image being a processed image created by the interpolation, and
- a second combining image being one of the initial images.

When the intermediate images are only created by interpolation, the movie may give a feeling of unreality, especially in scenes of dialogue. That's why some directors refuse to use high frame rate. When the intermediate images are only created as copies of initial images, the judder effect may appear. With this embodiment of the invention, the intermediate images are a combination of interpolated images and original images (= initial images), it is thus possible to avoid the weaknesses of full interpolated images and full original images.

More than two images may be used in the combination. The combination is not the reverse operation of the interpolation: the combination does not output any of the initial images.

It is also possible that the creation of the intermediate images involves that at least one of the intermediate images is determined using a combination of at least two initial images, without interpolation step.

In an embodiment, wherein a same initial image is used in the interpolation that provides the processed image and as the second combining image in the combination wherein said processed image is the first combining image. In other words, the initial image used in the combination (with the processed image) that provides the intermediate image was previously used in the interpolation that provided the processed image.

In an embodiment, said creation of the intermediate images involves that at least one of the intermediate images is determined using a combination of, at least:
- a first combining image being a processed image created by the interpolation, and
- a second combining image another processed image created by the interpolation.

In an embodiment, the combination includes to adjoin at least one area taken from the first combining image and at least one area taken from the second combining image. The at least one area taken from the first combining image and at least one area taken from the second combining image are not overlapping, and preferably form a full image. They are like pieces of a jigsaw puzzle. Each area is made of connected pixels. The combined areas form a resulting image wherein some pixels are coming from the first combining image and other pixels are coming from the second combining image.

For example, the method may detect spatial variation of luminosity, the areas where the luminosity or the contrast is above a threshold are taken from the first combining image obtained by interpolation, and the areas where the luminosity is lower than the threshold are taken from the second combining image which is an initial image.

In an embodiment, the combination depends on at least one of: luminosity, contrast or motion vector. Indeed, the drawbacks of high frame rate and low frame rate are more or less discernible as function of these parameters. An image in an action scene has typically some foreground parts with a high motion vector that benefit from interpolation and some background parts with low motion vector that can use original images (= initial images).

In an embodiment, the combination is done at least partially manually. For example, it may involve settable parameters that can be set manually. The combination may be done by the artistic team or by the director or photography of the movie. The parameters for the combination may be chosen for each shot or for each scene. For example, the original images (=initial images) may be preferred for a dialogue scene and the interpolated images may be advantaged for an action scene.

The invention also relates to a package of computer files designed to transport a movie to a film auditorium, comprising:
- a first computer file comprising a first sequence of images comprising initial images, said first sequence having a first frame rate,
- a second computer file comprising intermediate images designed to take place between the initial images in the movie when the movie is played at a second frame rate multiple of the first frame rate, and
- first pieces of information indicating that the first sequence is suitable for playing the movie at the first frame rate, and second pieces of information indicating how to play the movie in the second frame rate using, at least, the second computer file.

The package of computer files may have been created using any embodiment of the method for creating a package of computer files according to the invention.

In an embodiment, the second pieces of information indicate how to place the intermediate images with respect the initial images for playing the movie at the second frame rate.

The invention also relates to a method for playing a movie in a film auditorium, said film auditorium having a computing unit which is a first or second computing unit suitable respectively for a first or second frame rate, said method comprising the following steps:
- receiving a package of computer files according to any embodiment of the invention or created by any embodiment of a method for creating a package of computer files according to the invention,
- if the computing unit is the first computing unit, playing the movie as the first sequence of images, and
- if the computing unit is the second computing unit, playing the movie as a second sequence of images comprising initial images and intermediate images.

The invention also relates to a computer program comprising instructions which, when the program is executed by a computer system cause the computer system to carry out a method according to any embodiment of the invention.

The invention also relates to a computer-readable data carrier having stored thereon said computer program.

Except if explicitly indicated, the features of all embodiments of the invention are compatible with the features of all other embodiments of the invention.

### Brief description of the figures

For a better understanding of the present invention, reference will now be made, by way of example, to the accompanying drawings in which:
- Figure 1 is a block diagram of a package of computer files according to an embodiment of the invention,
- Figure 2a is a block diagram of a first sequence of images according to an embodiment of the invention,
- Figure 2b is a block diagram of a first sequence of images according to an embodiment of the invention,
- Figure 3 is schematic flow chart of a method for creating a package of computer files according to an embodiment of the invention,
- Figure 4 is schematic flow chart of a first possible way to create intermediate images,
- Figure 5 is schematic flow chart of a second possible way to create intermediate images,
- Figure 6 is schematic flow chart of a third possible way to create intermediate images,
- Figure 7 schematically illustrates an example of a combination of two images, in an embodiment of the invention,
- Figure 8 schematically illustrates a film auditorium of a cinema, and
- Figure 9 is schematic flow chart of a method for playing a movie, in an embodiment of the invention.

### Description of the invention

The present invention will be described with respect to particular embodiments and with reference to certain drawings but the invention is not limited thereto. The described functions are not limited by the described structures. The drawings described are only schematic and are non-limiting. In the drawings, the size of some of the elements may be exaggerated and not drawn on scale for illustrative purposes.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Furthermore, the various embodiments, although referred to as "preferred" are to be construed as exemplary manners in which the invention may be implemented rather than as limiting the scope of the invention.

The term "comprising", used in the claims, should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B, rather with respect to the present invention, the only enumerated components of the device are A and B, and further the claim should be interpreted as including equivalents of those components.

On the figures, identical or analogous elements may be referred by a same number.

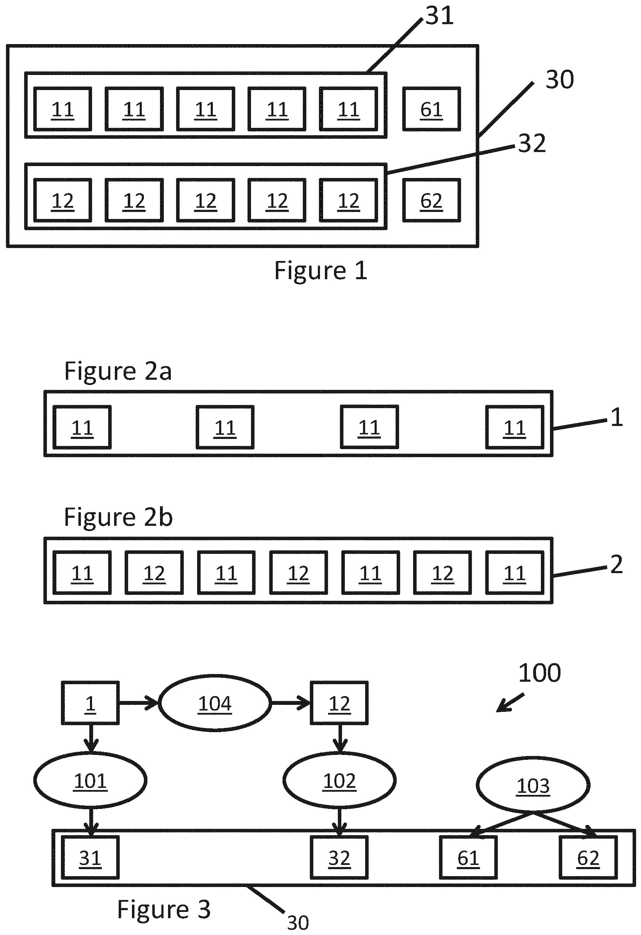

Figure 1 illustrates a package of computer files 30 according to an embodiment of the invention. The package of computer files 30 includes a first computer file 31 comprising initial images 11 forming a first sequence 1 of images (figure 2a), and a second computer file 32 comprising intermediate images 12 which can be placed between the initial images 11 to form a second sequence 2 of images (figure 2b). The package of computer files 30 includes also first pieces 61 of information indicating that the first sequence 1 is suitable for playing the movie at a first frame rate, and second pieces 62 of information indicating how to play the movie in a second frame rate, multiple of the first time rate, using, at least, the second computer file 32.

In an embodiment of the invention, the second computer file 32 comprises the initial images 11 and the intermediate images 12. In another embodiment, the second computer file 32 comprises the intermediate images 12 but not the initial images. In such a case, the second pieces 62 of information preferably indicate where to place the intermediate images 12 with respect to the initial images 11 for playing the movie at the second frame rate. Preferably, each intermediate image 12 is placed in between two successive initial images 11.

Figure 2a illustrates the first sequence 1 of images according to an embodiment of the invention. The first sequence 1 comprises only the initial images 11, organized to be played in chronological order. The initial images 11 are sufficient to play the movie at the first frame rate.

Figure 2b illustrates the second sequence 2 of images according to an embodiment of the invention. The second sequence comprises an alternating succession of the initial images 11 and the intermediate images 12, in such a way that they are organized to be played in chronological order. The intermediate images 12 are necessary to play the movie at the second frame rate. If the second frame rate is N times the first frame rate, N-1 intermediate image(s) 12 is (are) placed between each two successive initial images 11. The second sequence 2 is preferably created by a display system 210, after reception 170 of the package of computer files 30.

Figure 3 illustrates a method 100 for creating a package of computer files 30 according to an embodiment of the invention. The method 100 starts from the first sequence 1, which comprises the initial images 11. The method 100 is performed on a computer system used for the post-production of the movie.

A step 101, the first computer file 31 is created, preferably as a first MXF container. At step 102, the second computer file 32 is created, preferably as a second MXF container. At step 103, the first pieces 61 of information are created, and preferably included in a first CPL, and the second pieces 62 of information are created, and preferably included in a second CPL.

In a first embodiment of the invention, the initial 11 and the intermediate 12 images are original images of the movie. In a second, preferred, embodiment of the invention, the initial images 11 are original images of the movie and the intermediate images 12 are created 104 from the initial images 11 of the first sequence 1. Several exemplary embodiments of the creation step 104 are described in the present document.

The package of computer files 30 is created by grouping the first computer file 31, the second computer file 32, the first pieces 61 of information, and the second pieces 62 of information.

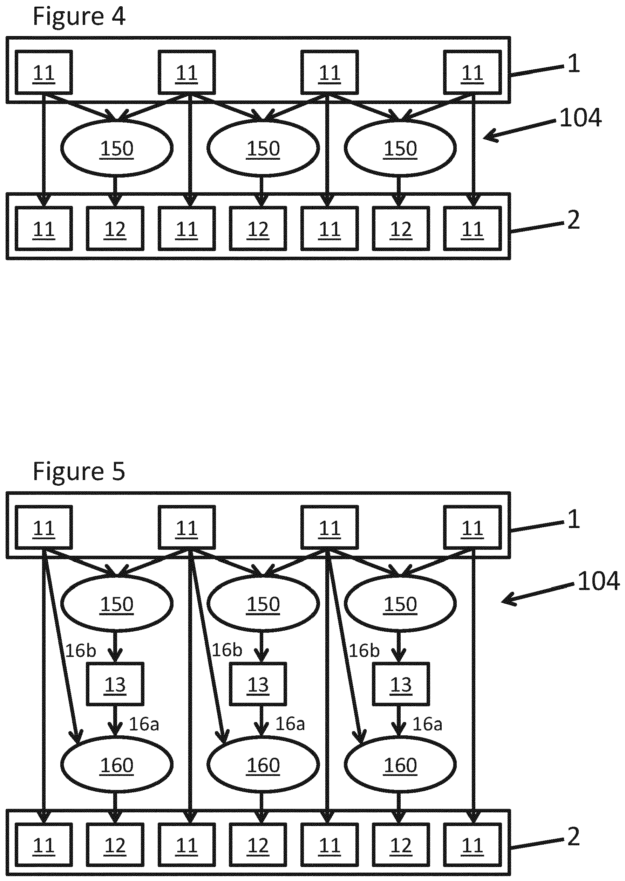

Figure 4 illustrates a first possible way to create 104 the intermediate images 12 from the initial images 11. Two successive initial images 11 are used as input in an interpolation 150 that provides the intermediate image 12, which will be placed, when playing the movie, between said successive initial images 11.

Figure 5 illustrates a second possible way to create 104 the intermediate images 12 from the initial images 11. Two successive initial images 11 are used as input in an interpolation 150 that provides a processed image 13 chronologically located between said successive initial images 11, and also called interpolated image. Each intermediate image 12 is determined as a combination 160 of the processed image 13 (having in the combination 160 a function of first combining image 16a) and the initial image 11 used to create said processed image 13. This initial image 11 has a function of second combining image 16b in the combination 160.

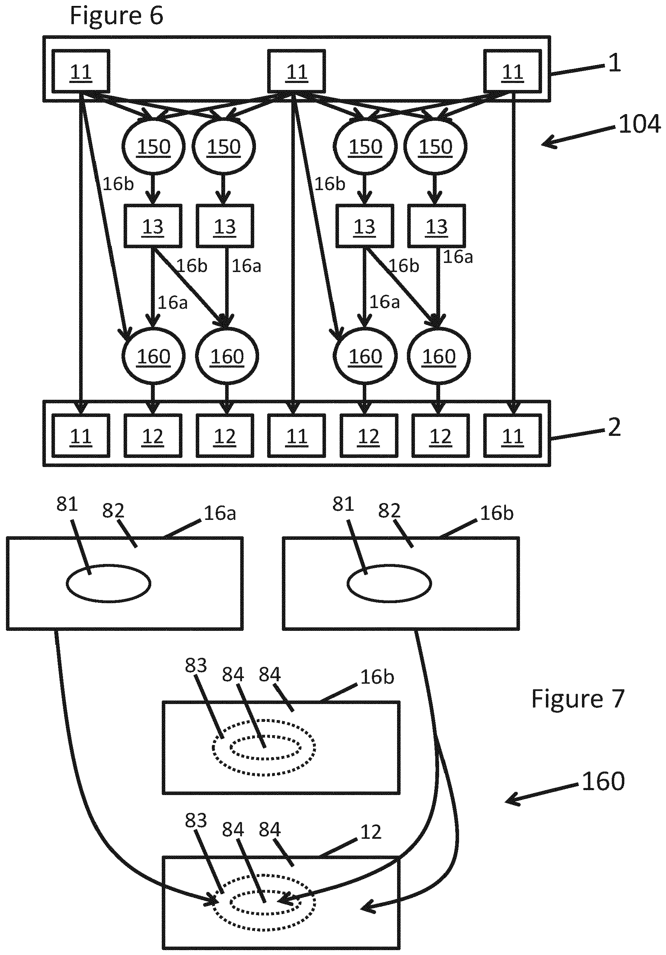

Figure 6 illustrates a third possible way to create 104 the intermediate images 12 from the initial images 11. Two successive initial images 11 are used as input in an interpolation 150 that provides two processed images 13 chronologically located between said successive initial images 11. Each intermediate image 12 is determined as a combination 160 of a first combining image 16a and a second combining image 16b. For a given intermediate image 12, the first combining image 16a is the processed image 13 chronologically located at the same place as said given intermediate image 12. The second combining image 16b may be one of the two successive initial images 11 that surrounds said given intermediate image 12. The second combining image 16b may also be another processed image 13 chronologically located between the two successive initial images 11 that surrounds said given intermediate image 12.

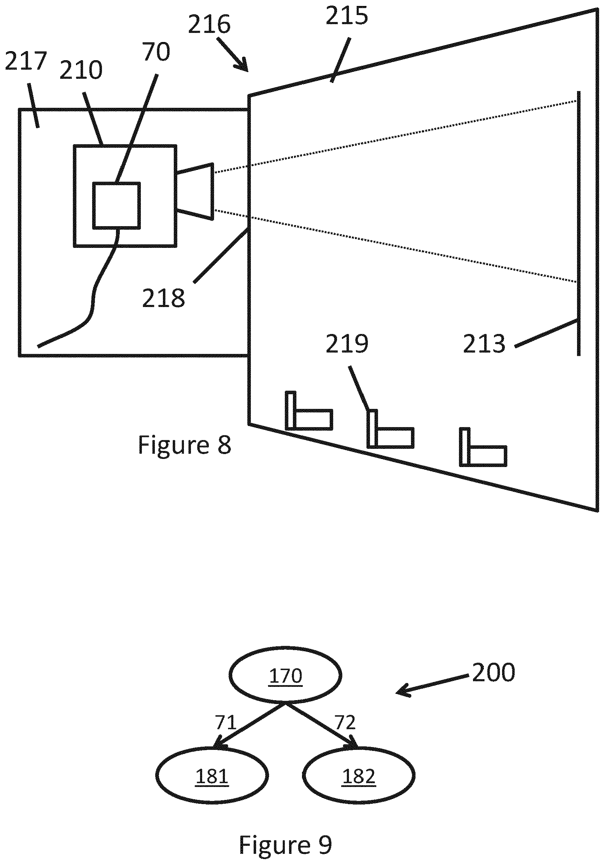

Any combination of the steps described in reference to Figures 4, 5, and 6 are possible in the framework of the invention. Even if Figures 4, 5, and 6 show the intermediate images 12 as part of the second sequence 2, the second sequence 2 is preferably created in a display system 210 of the film auditorium 215 (Figure 8).

As illustrated in an example at Figure 7, the combination 160 preferably comprises a step wherein at least one area 83 taken from the first combining image 16a and at least one area 84 taken from the second combining image 16b are adjoined, i.e. are placed next to each other, in order to create the intermediate image 12.

In the example of Figure 7, the first 16a and the second 16b combining images comprise a dark object 81 on a light background 82. Between both images, the object 81 has slightly moved. The combination 160 determines an area 83 in the second combining image 16b wherein the variation of luminosity is higher than a threshold. The area 83 surrounds the border of the object 81. Then, the combination 160 takes the area 83 from the first combining image 16a and the rest of the image (made of two areas 84) from the second combining image 16b in order to create the intermediate image 12. The threshold may be set automatically or manually.

Figure 8 illustrates a film auditorium 215 of a cinema 216. A display system 210 comprising a projector is preferably located in a projection booth 217 of the film auditorium 215. The projection booth 217 may be separated from the film auditorium 215 by a porthole 218. The film auditorium 215 comprises seats 219, and a projection screen 213 on which the movie is played. The display system 210 comprises a computing unit 70 suitable for receiving the package of computer files 30 and to process it in such a way that the projector plays the movie. The computing unit 70 may be located outside the projection booth 217, for example on a server of the cinema 216. The cinema 216 may comprise several films auditorium 215, each with a display system 210.

Figure 9 illustrates a method 200 for playing a movie in a film auditorium 215 having either a first computing unit 71 suitable for the first frame rate or second computing unit 72 suitable for the second frame rate. At step 170, the display system 210 receives a package of computer files 30 according to an embodiment of the invention.

If the computing unit is a first computing unit 71 suitable for the first frame rate, the movie is played 181 in the first frame rate using the first pieces 61 of information and the first sequence 1 of images obtained from the first computer file 31.

If the computing unit is a second computing unit 72 suitable for the second frame rate, the movie is played 182 in the second frame rate using the second pieces 62 of information and the second sequence 2 of images. If the initial images 11 are present in the second computer file 32, the first computer file 31 is preferably not used at this step. If the initial images 11 are not present in the second computer file 32, the initial images 11 are obtained from the first computer file 31, the intermediate images 12 are obtained from the second computer file 32, and the initial 11 and intermediate 12 images are assembled to form the second sequence 2, and the movie is played 182 in the second time rate using the second pieces 62 of information and the second sequence 2 of images.

In other words, the invention relates to a package of computer files 30, preferably a DCP, which includes images for playing a movie at two frame rates. The images 11 for the lower frame rate are in a first computer file 31, i.e. in a first MXF container, and the images 12 for the higher frame rate are in a second computer file 32, i.e. in a second MXF container. The package of computer files 30 also includes a first CPL with first pieces 61 of information, for the lower frame rate, and a second CPL with second pieces 62 of information, for the higher frame rate.

Although the present invention has been described above with respect to particular embodiments, it will readily be appreciated that other embodiments are also possible.

## Claims

1. Method (100) for creating a package of computer files (30) designed to transport a movie to a film auditorium (215) of a cinema (216),
said method comprising the following steps:
(a) creating (101) a first computer file (31) comprising a first sequence (1) of images comprising initial images (11), said first sequence (1) having a first frame rate, and
(b) creating (102) a second computer file (32) comprising intermediate images (12) designed to take place between the initial images (11) in the movie when the movie is played at a second frame rate multiple of the first frame rate,
wherein the package of computer files (30) comprises the first computer file (31), the second computer file (32), first pieces (61) of information indicating that the first sequence (1) is suitable for playing the movie at the first frame rate, and second pieces (62) of information indicating how to play the movie in the second frame rate using, at least, the second computer file (32).

2. Method according to claim 1, wherein the second pieces (62) of information indicate how to place the intermediate images (12) with respect to the initial images (11) for playing the movie at the second frame rate.

3. Method according to any of the preceding claims, comprising a creation (140) of the intermediate images (12) based on the initial images (11).

4. Method according to the preceding claim, wherein said creation (140) of the intermediate images (12) involves that at least one of the intermediate images (12) is determined using an interpolation (150) between two successive initial images (11) chronologically located before and after said at least one of the intermediate images (12).

5. Method according to claim 4, wherein said creation (140) of the intermediate images (12) involves that at least one of the intermediate images (12) is determined using a combination (160) of, at least:
∘ a first combining image (16a) being a processed image (13) created by the interpolation (150), and
∘ a second combining image (16b) being one of the initial images (11).

6. Method according to claim 5, wherein a same initial image (11) is used in the interpolation (150) that provides the processed image (13) and as the second combining image (16b) in the combination (160) wherein said processed image (13) is the first combining image (16a).

7. Method according to claim 4, wherein said creation (140) of the intermediate images (12) involves that at least one of the intermediate images (12) is determined using a combination (160) of, at least:
∘ a first combining image (16a) being a processed image (13) created by the interpolation (150), and
∘ a second combining image (16b) another processed image (13) created by the interpolation (150).

8. Method according to any of claim 5 to 7, wherein the combination (160) includes to adjoin at least one area (83) taken from the first combining image (16a) and at least one area (84) taken from the second combining image (16b).

9. Method according to any of claims 5 to 7, wherein the combination (160) depends on at least one of: luminosity, contrast or motion vector.

10. Method according to any of claims 5 to 8, wherein the combination (160) is done at least partially manually.

11. Package of computer files (30) designed to transport a movie to a film auditorium (215), comprising:
• a first computer file (31) comprising a first sequence (1) of images comprising initial images (11), said first sequence (1) having a first frame rate,
• a second computer file (32) comprising intermediate images (12) designed to take place between the initial images (11) in the movie when the movie is played at a second frame rate multiple of the first frame rate, and
• first pieces (61) of information indicating that the first sequence (1) is suitable for playing the movie at the first frame rate, and second pieces (62) of information indicating how to play the movie in the second frame rate using, at least, the second computer file (32).

12. Package of computer files (30) according to the preceding claim, wherein the second pieces (62) of information indicate how to place the intermediate images (12) with respect the initial images (11) for playing the movie at the second frame rate.

13. Method (200) for playing a movie in a film auditorium (215), said film auditorium (215) having a computing unit (70) which is a first (71) or second (72) computing unit suitable respectively for a first or second frame rate,
said method comprising the following steps:
• receiving (170) a package of computer files (30) according to claim 11 or 12,
• if the computing unit (70) is the first computing unit (71), playing (181) the movie as the first sequence (1) of images, and
• if the computing unit (70) is the second computing unit (71), playing (182) the movie as a second sequence (2) of images comprising initial images (72) and intermediate images (12).

14. Computer program comprising instructions which, when the program is executed by a computer system cause the computer system to carry out a method according to any of claims 1 to 10 or to claim 13.

15. A computer-readable data carrier having stored thereon the computer program of claim 14.
